# EUROPÄISCHE PATENTANMELDUNG

(11) **EP 2 372 245 A1**
(43) Veröffentlichungstag der Anmeldung: **05.10.2011**
(21) Anmeldenummer: 10157921.7
(22) Anmeldetag: 26.03.2010
(51) Int. Cl.: F23L 15/00, F23R 3/00, F23R 3/10, F23R 3/54

(54) **Brenner zur Stabilisierung der Verbrennung einer Gasturbine sowie Verfahren**

(71) Anmelder: Siemens Aktiengesellschaft, 80333 München (DE)
(72) Erfinder: Hase, Matthias, 45478 Mülheim (DE)

(57) **Zusammenfassung**

Die Erfindung betrifft einen Brenner zur Stabilisierung der Verbrennung einer Gasturbine, welcher einen Brennkammer (5) und mehrere in die Brennkammer (5) mündende Düsen umfasst, wobei mit den Düsen durch einen Fluidstrahl Fluid in die Brennkammer (5) eingebracht wird, wobei das Fluid in der Brennkammer (5) zu Heißgas (4) verbrannt wird, wobei bei der mindestens einen Düse ein Ringspalt (8) vorgesehen ist, über welchen der Düse das Fluid an einem Düseneintritt zugeführt wird, wobei ein Vorwärmer (50,60,70,80,90,100,110,120,130, 140) vorgesehen ist, welcher das Fluid vor Eintritt in die Düse erwärmt. Weiterhin betrifft die Erfindung ein Verfahren zur Stabilisierung der Verbrennung eines Brenners einer Gasturbine.

## Beschreibung

Die vorliegende Erfindung betrifft einen Brenner zur Stabilisierung der Verbrennung einer Gasturbine, welcher eine Brennkammer und mehrere in die Brennkammer mündende Düsen umfasst, wobei mit den Düsen durch einen Fluidstrahl Fluid in die Brennkammer eingebracht wird, wobei das Fluid in der Brennkammer zu Heißgas verbrannt wird, wobei bei der mindestens einen Düse ein Ringspalt vorgesehen ist, über welchen der Düse das Fluid an einem Düseneintritt zugeführt wird. Darüber hinaus bezieht sich die vorliegende Erfindung auf ein Verfahren zur Stabilisierung der Verbrennung eines Brenners einer Gasturbine.

Auf vorgemischten Strahlflammen basierende Verbrennungssysteme bieten gegenüber drallstabilisierten Systemen aufgrund der verteilten Wärmefreisetzungszonen und der fehlenden drallinduzierten Wirbel insbesondere aus thermoakustischer Sicht Vorteile. Durch geeignete Wahl des Strahlimpulses lassen sich kleinskalige Strömungsstrukturen erzeugen, die akustisch induzierte Wärmefreisetzungsfluktuationen dissipieren und somit Druckpulsationen, die für drallstabilisierte Flammen typisch sind, unterdrücken.

Eine Stabilisierung der Verbrennung bei gleichzeitigem Erzielen eines sehr hohen Wirkungsgrads und einer geringen Schadstoffproduktion kann hierbei durch eine sehr starke Verdünnung des Betriebsgases mit Verbrennungsabgasen erreicht werden. Anstelle einer sichtbaren Flammenfront findet eine nicht leuchtende Verbrennung statt, die auch als milde Verbrennung, farblose Verbrennung oder Volumenverbrennung bekannt ist. Ein hoher Volumenstrom von Abgas in die Verbrennungszone kann hierbei durch eine Rezirkulierung von Verbrennungsabgasen erreicht werden, die vorzugsweise brennraumintern erfolgt. Die rezirkulierten Verbrennungsabgase verdünnen das in den Brennraum eingebrachte Frischgas und bewirken außerdem eine hohe Vorwärmung des entstehenden Gasgemisches auf Temperaturen oberhalb einer Selbstentzündungstemperatur des Betriebsgases. Anstelle einer herkömmlichen Flammenfront wird eine großvolumige Flammzone erreicht, in deren Volumen eine annähernd gleichmäßige Verbrennung erfolgt.

Gerade jedoch im Teillastbereich oder Grundlastbereich mit Druckpulsationen im mittleren oder hohen Frequenzbereich ist eine Stabilisierung der Verbrennung notwendig.

Es ist daher eine Aufgabe der Erfindung, einen Brenner anzugeben, der eine stabile Verbrennung mit geringen Druckpulsationen gerade im Teillastbereich oder im Grundlastbereich des Brenners, bei denen Druckpulsationen im mittleren oder hohen Frequenzbereich vorherrschen, anzugeben. Eine weitere Aufgabe ist die Angabe eines Verfahrens, welches eine solche Verbrennung bewirkt.

Die auf den Brenner bezogene Aufgabe wird durch einen Brenner zur Stabilisierung der Verbrennung einer Gasturbine nach Anspruch 1 gelöst. Die auf das Verfahren bezogene Aufgabe wird durch die Angabe eines Verfahrens nach Anspruch 29 gelöst. Die abhängigen Ansprüche enthalten weitere, vorteilhafte Ausgestaltungen der Erfindung.

Dabei umfasst der erfindungsgemäße Brenner zur Stabilisierung der Verbrennung einer Gasturbine eine Brennkammer und mehrere in die Brennkammer mündende Düsen, insbesondere Strahldüsen. Mit den Strahldüsen wird durch einen Fluidstrahl Fluid in die Brennkammer eingebracht. Dabei wird das Fluid in dem Brennkammer zu Heißgas verbrannt. Bei mindestens einer Strahldüse ist zudem ein Ringspalt vorgesehen, über welchen der Strahldüse das Fluid an einem Düseneintritt, insbesondere Strahldüseneintritt zugeführt wird.

Erfindungsgemäß wurde erkannt, dass gerade bei strahlbasierten Verbrennungssystemen eine hohe Luftvorwärmtemperatur als Maßnahme gegen Druckpulsationen vorteilhaft ist.

Dabei steht nicht der niedrige Lastbereich mit einer mageren Verlöschgrenze mit niederfrequenten Druckpulsationen im Vordergrund, sondern der Teillast oder Grundlastbereich mit Druckpulsationen im mittleren oder hohen Frequenzbereich. Es wurde erkannt, dass sich die anzustrebenden Vorwärmtemperaturen ab einem thermodynamischen Gasturbinenprozess von 25 bar einstellen. Diese Vorwärmtemperaturen werden jedoch für die momentane Gasturbinengeneration im Regelfall nicht erreicht. Jedoch ist auch für Gasturbinenprozesse, welche diesen Druck erzielen noch ein Potential für die Verringerung von Druckpulsationen durch eine höhere Brennerlufttemperatur vorhanden.

Erfindungsgemäß ist nun ein Vorwärmer vorgesehen, welcher das Fluid vor Eintritt in die Düse, insbesondere in die Strahldüse, erwärmt. Durch diese fertigungstechnisch einfach umsetzbare Maßnahme wird die Fluidtemperatur, insbesondere also die Lufttemperatur bzw. die Luft/Brennstofftemperatur vor Eintritt in die Strahldüse, das heißt auch in die Brennkammer, gelöst. Durch den Einsatz eines solchen Vorwärmers und der einhergehenden Fluidvorwärmung wird daher der Verbesserung der Stabilität der Verbrennung eines Brenners, insbesondere eines Strahlbrenners erzielt.

Das erfindungsgemäße Verfahren zur Stabilisierung der Verbrennung eines Brenners einer Gasturbine umfasst dabei eine Brennkammer und mehrere in die Brennkammer mündende Düsen, insbesondere Strahldüsen. Mittels der Strahldüsen wird mit einem Fluidstrahl Fluid in die Brennkammer eingebracht, wobei in der Brennkammer das Fluid verbrannt wird und wodurch ein Heißgas entsteht. Dabei ist bei mindestens einer Strahldüse ein Ringspalt vorgesehen, über welchen der Düse das Fluid zugeführt wird, so dass das Fluid mittels eines Vorbrenners vor Eintritt in die Düse erwärmt wird.

Durch das erfindungsgemäße Verfahren sowie den erfindungsgemäßen Brenner wird nun die Fluidtemperatur vor dem Eintritt in den Brenner erhöht. Damit wird die Stabilität des Brenners wesentlich erhöht.

Weitere Merkmale, Eigenschaften und Vorteile der vorliegenden Erfindung werden nachfolgend anhand von Ausführungsbeispielen unter Bezugnahme auf die beiliegenden Figuren beschrieben.

Darin zeigen:
- Fig. 1: einen schematischen Ausschnitt aus einer Gasturbine mit einer Brennkammer in einem Längsschnitt entlang einer Wellenachse nach dem Stand der Technik,
- Fig. 2: schematisch einen Schnitt durch einen Strahlbrenner quer zu dessen Längsrichtung,
- Fig. 3: schematisch einen Schnitt durch einen weiteren Strahlbrenner quer zu dessen Längsrichtung,
- Fig. 4: einen schematischen Querschnitt eines Brennersystems mit erfindungsgemäßen Brenner,
- Fig. 5: ein erstes Beispiel eines erfindungsgemäßen Brenners mit Trapped Vortex Brenner,
- Fig. 6: ein zweites Beispiel eines erfindungsgemäßen Brenners mit Vorbrenner,
- Fig. 7: ein drittes Beispiel eines erfindungsgemäßen Brenners mit Vorbrenner,
- Fig. 8: ein viertes Beispiel eines erfindungsgemäßen Brenners mit Vorbrenner,
- Fig. 9: ein fünftes Beispiel eines erfindungsgemäßen Brenners mit Vorbrenner,
- Fig. 10: ein sechstes Beispiel eines erfindungsgemäßen Brenners mit Vorbrenner,
- Fig. 11: ein als Wärmetauscher ausgestalteten Vorwärmer,
- Fig. 12: ein als Wärmetauscher ausgestalteten Vorwärmer, welcher im Ringspalt angeordnet ist,
- Fig. 13: einen erfindungsgemäßen Wärmetauscher - Ringspalt,
- Fig. 14: einen als elektrischen Heizer ausgestalteten Vorwärmer,
- Fig. 15: einen als elektrischen Heizer ausgestalteten Vorwärmer im Ringspalt.

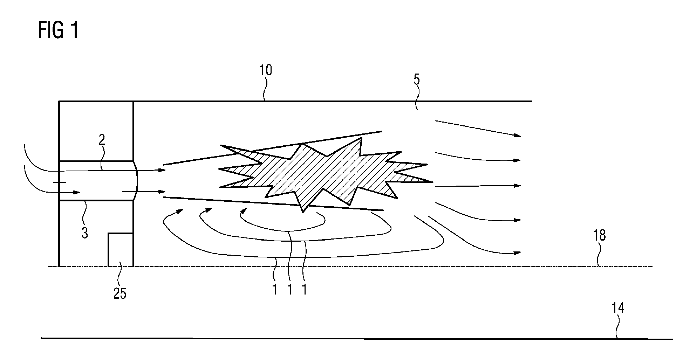

Fig. 1 zeigt einen Ausschnitt aus einer Gasturbine mit einer entlang einer Wellenachse 14 angeordneten und nicht dargestellten Welle und einer parallel zur Wellenachse 14 ausgerichteten Brennkammer 5 in einem Längsschnitt. Die Brennkammer 5 ist rotationssymmetrisch um eine Brennkammerachse 18 aufgebaut. Die Brennkammerachse 18 ist in diesem speziellen Ausführungsbeispiel parallel zur Wellenachse 14 angeordnet, wobei sie auch angewinkelt zur Wellenachse 14, im Extremfall senkrecht zu dieser verlaufen kann. Ein ringförmiges Gehäuse 10 umgibt die Brennkammer 5. Mittels einer Strahldüse 3 des Stands der Technik wird ein Fluid zumeist Luft bzw. Luft/Brennstoffgemisch in den Brennkammer 5 eingebracht. Die rezirkulierenden Heißgase 4 in der Brennkammer 5 sind mit 1 angegeben.

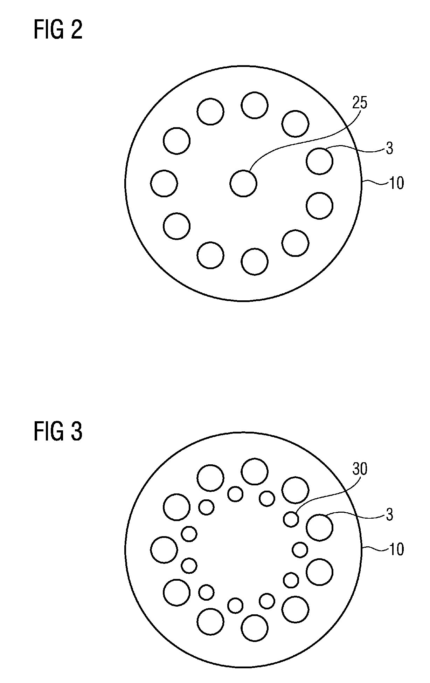

Die Fig. 2 zeigt schematisch einen Schnitt durch einen Strahlbrenner senkrecht zu einer Wellenachse 14 des Brenners. Der Brenner umfasst ein Gehäuse 10, welches einen kreisförmigen Querschnitt aufweist. Innerhalb des Gehäuses 10 ist eine bestimmte Anzahl an Strahldüsen 3 im Wesentlichen ringförmig angeordnet. Jede Strahldüse 3 weist dabei einen kreisförmigen Querschnitt auf. Außerdem kann der Brenner einen Pilotbrenner 25 umfassen.

Die Fig. 3 zeigt schematisch einen Schnitt durch einen wei5teren Strahlbrenner, wobei der Schnitt senkrecht zur Mittelachse des weiteren Brenners verläuft. Der Brenner weist ebenfalls ein Gehäuse 10 auf, welches einen kreisförmigen Querschnitt besitzt und in welchem eine Anzahl innerer und äußerer Strahldüsen 3,30 angeordnet ist. Die Strahldüsen 3,30 weisen jeweils einen kreisförmigen Querschnitt auf, wobei die äußeren Strahldüsen 3 eine gleich große oder größere Querschnittsfläche besitzen als die inneren Strahldüsen 30. Die äußeren Strahldüsen 3 sind im Wesentlichen ringförmig innerhalb des Gehäuses 10 angeordnet und bilden einen äußeren Ring. Die inneren Strahldüsen 30 sind ebenfalls innerhalb des Gehäuses 10 ringförmig angeordnet. Die inneren Strahldüsen 30 bilden einen inneren Ring, der konzentrisch zu dem äußeren Strahldüsenring angeordnet ist.

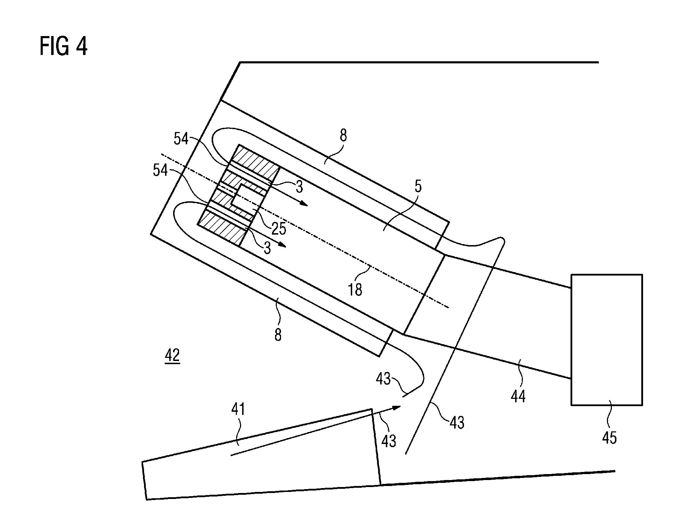

Fig. 4 zeigt den schematischen Querschnitt eines erfindungsgemäßen Brenners. Dieser weist einen Kompressor mit Kompressoraustrittsdiffusor 41 auf. Der Brenner weist zudem einen Ringspalt 8 auf, welcher sich brennkammerabseitig an der Düse und teilweise brennkammerabseitig an der Brennkammer 5 befindet. Der Ringspalt 8 dient dabei der äußeren Strömungsführung der verdichteten Luft 43 oder des Luft/Brennstoff-Gemisches, welche durch den Kompressor verdichtet wird und am Kompressoraustrittsdiffusor 41 austritt und anschließend oder währenddessen mit Brennstoff gemischt wird. Dabei strömt diese verdichtete Luft 43 oder das Gemisch entgegen derjenigen Strömungsrichtung der Heißgase, die in der Brennkammer 5 vorhanden sind, und welche als Brennkammerströmungsrichtung bezeichnet wird. Die Luft 43 oder das Luft/Brennstoffgemisch strömt im Ringspalt 8 zum Eintritt der Strahldüse 3, dem Strahldüseneintritt 54 und strömt dann durch die Düse 3 hindurch zur Brennkammer 5, wo sie beispielsweise mithilfe des Pilotbrenners 25 verbrannt wird. Hierzu kann die statische Druckdifferenz genutzt werden (hohe Strömungsgeschwindigkeit im Spalt 8). Zwischen Kompressoraustrittsdiffusor 41 und Ringspalt 8 ist ein Plenum 42 vorgesehen. Der Brennkammer in Brennkammerströmungsrichtung nachgeschaltet befindet sich ein Übergangstück 44, welchem sich eine Turbine 45 anschließt.

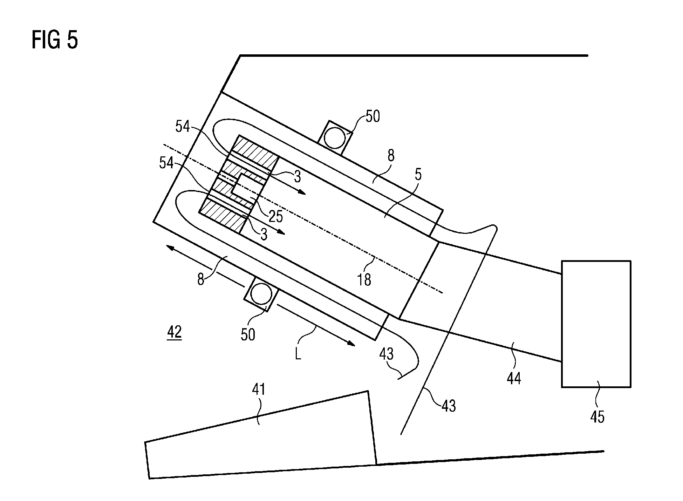

Fig. 5 zeigt ein erstes Beispiel eines erfindungsgemäßen Brenners, mit einem Trapped vortex Brenner (Vorbrenner) 50 als Vorwärmer. Dabei besteht der Trapped vortex Brenner 50 aus einer Kavität, die in diesem Fall am Ringspalt 8 brennkammerabseitig angebracht ist und mindestens eine Öffnung zum Ringspalt 8 hin aufweist. Der Trapped Vortex Brenner 50 ist dabei ein aus Forschung und Entwicklung bekanntes Konzept, bei dem typischerweise in eine Kavität Brennstoff eingedüst wird (nicht gezeigt). Der Brennstoff wird in der Kavität mit Luft 43 vermischt und wird in der Kavität auch verbrannt. Die Kavität kann beispielsweise konzentrisch zur Achse 18 angeordnet sein und im Schnitt entlang der Achse 18 einen rechteckigen Querschnitt aufweist. Erfindungsgemäß strömt die verdichtete Luft 43 aus dem Diffusoraustritt 41 durch das Plenum 42 und kann dort bereits mit Brennstoff gemischt werden. Anschließend strömt die verdichtete Luft 43 (oder das Luft/Brennstoff Gemisch) in den Ringspalt 8 ein und strömt dort entgegen der Brennkammerströmung zum Eintritt der Strahldüse 3, dem Strahldüseneintritt 54. Die Luft 43 wird in der Kavität mit eingedüstem Brennstoff vermischt und kann in der Kavität auch verbrannt werden. Somit wird die Lufttemperatur (Luft/Brennstofftemperatur) vor Eintritt in die Strahldüse 3 erhöht, so dass eine wesentliche Verbesserung der Stabilität der Verbrennung gerade im Teillast oder Grundlastbereich mit Druckpulsationen im mittleren oder hohen Frequenzbereich erfolgt. Der Trapped Vortex Brenner 50 kann dabei über die gesamte axiale Länge L bezogen auf die Brennkammerachse 18 angebracht werden. Vorteilhafterweise kann sich der Trapped Vortex Brenner 50 als kompletter Ring ringförmig um den Ringspalt 8 herum erstrecken oder auch in Ringsegmenten mit oder ohne Unterbrechung.

Die mindestens eine Strahldüse sowie optional ein Pilotbrenner wird als Hauptstufe oder Hauptbrenner bezeichnet.
Für eine gleichmäßige Temperaturerhöhung der Luft ist eine möglichst gleichmäßige Verteilung des erzeugten Abgases vorteilhaft. Hieraus resultiert, dass ein möglichst langer Mischungsweg zu dem als Hauptbrenner fungierenden Strahlbrenner vorteilhaft ist. Hierzu kann der Trapped Vortex Brenner 50 auch im Plenum 42 angeordnet werden (nicht dargestellt).

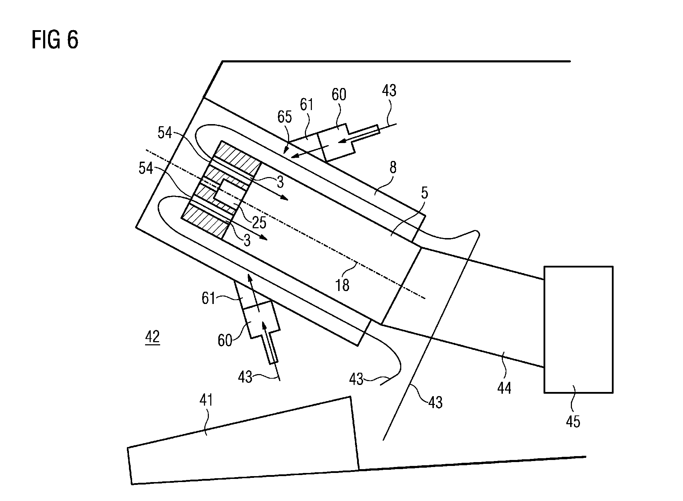

Fig. 6 zeigt ein zweites Beispiel eines erfindungsgemäßen Brenners mit Vorbrenner 60. Dieser kann mit bekannten Stabilisierungsmechanismen (z.B. Drall, Prallplatte) arbeiten. Der Vorbrenner 60 kann dabei an der äußeren Strömungsführung, das heißt am Ringspalt 8 platziert sein. Der Vorbrenner 60 kann mit eigener kleiner Brennkammer 61 ausgeführt werden. Die Luft 43 durchströmt den Brenner vom Plenum 42 in den Ringspalt um die Brennerkammer 5. Hierzu kann die statische Druckdifferenz genutzt werden (hohe Strömungsgeschwindigkeit im Spalt).

Zudem strömt die Luft 43 (Luft/ Brennstoffgemisch) auch vom Plenum 42 in den Vorbrenner 60 ein, wird dort verbrannt und strömt und von dort in Ringspalt 8 weiter. Wird der Vorbrenner 60 nicht mit eigener oder unzureichender Brennkammer 61 ausgeführt, so kann alternativ oder zusätzlich auch der Ringspalt 8 als Brennkammer verwendet werden.

Es kann zudem ein "Rich-Quench-Lean" RQL-Verbrennungskonzept zum Einsatz kommen, wobei der Buchstabe R für "rich burn", der Buchstabe Q "quick quench" und der Buchstabe 1 für "lean burn" steht. Das RQL-Verbrennungskonzept bedeutet, dass direkt stromab eines Brenners, über welchen ein brennstoffreiches, fettes Luft-Brennstoff-Gemisch in die Brennkammer eingeleitet wird, zunächst dieses brennstoffreiche Gemisch (= rich burn) teilweise verbrannt wird, wobei die noch brennenden Brenngase anschließend schnell abgekühlt werden (quick quench, Flammenverlöschen) und danach brennstoffarm, d. h. mager (= lean burn) weiterverbrannt werden. Der Quenchbereich hier ist mit 65 bezeichnet. Aufgrund der anfänglichen brennstoffreichen Verbrennung können sich niedrigere Temperaturen in der Bennkammer 5 ergeben, so dass die NOx-Bildung reduziert wird.

Handelt es sich hier um ein RQL-Verbrennungskonzept so wird vorzugsweise der Vorbrenner 60 fett und die Hauptstufe mager betrieben. Das Flammenverlöschen wird durch die Ringspaltströmung besorgt. Der Vorbrenner 60 kann als mehrere Einzelbrenner oder/und als ein Ringbrenner ausgeführt werden. Der Vorbrenner 60 kann dabei variable über die gesamte axiale Länge L, bezogen auf die Brennkammerachse 18, angebracht werden. Ebenso ist der Winkel zwischen Vorbrenner 60 und Ringspalt 8 beliebig einstellbar. Vorteilhaft ist der Vorbrenner 60 in einem Winkel zwischen 15° und 60° zum Ringspalt 8 angeordnet.

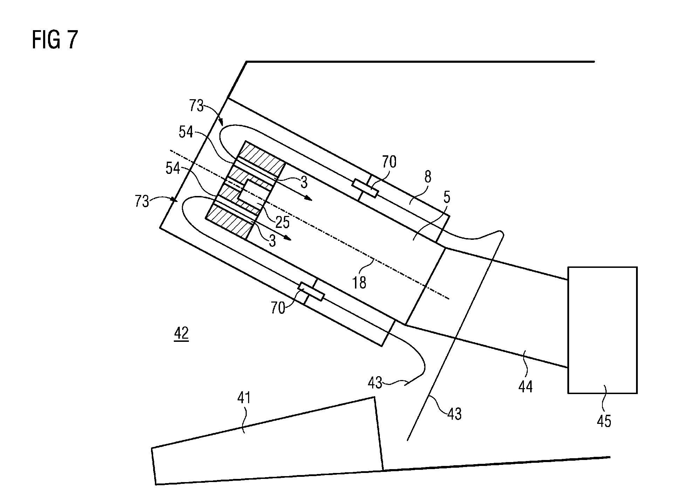

Fig. 7 zeigt ein drittes Beispiel eines erfindungsgemäßen Brenners mit Vorbrenner 70. Dieser ist im Ringspalt 8 selber angeordnet. Dieser kann ebenfalls als Rich-Quench-Lean Verbrennungskonzept, als Einzel- oder Ringbrenner mit oder ohne Brennkammer ausgeführt werden. Im Hinblick auf das RQL-Verbrennungskonzept wird das Flammenverlöschen hier ebenfalls durch die Ringspaltströmung besorgt. Der Vorbrenner 70 kann dabei variable im Ringspalt 8 über die gesamte axiale Länge L bezogen auf die Brennkammerachse 18 angebracht werden.

Der Ringspalt 8 weist eine Umlenkung 73 auf. Die Umlenkung 73 dient dazu, dass die Luft 43 bzw. das Luft/Brennstoff Gemisch an den Düseneintritt 54 transportiert wird. Diese Umlenkung 73 kann in etwa 180° betragen.

Der Vorbrenner 70 kann beispielsweise auch in der Umlenk 73 angeordnet werden. Auch eine direkte Anordnung vor den Düsen 3 der Hauptbrennstufe ist möglich. In dieser Ausführungsvariante ist es vorteilhaft, den bzw. die Vorbrenner 70 in Reihe mit den Düsen 3 anzuordnen, so dass eine exakte Verteilung der vorgewärmten Luft gewährleistet ist.

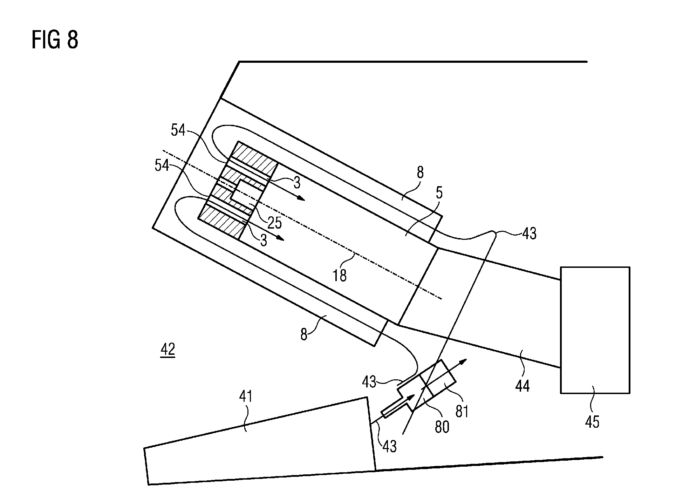

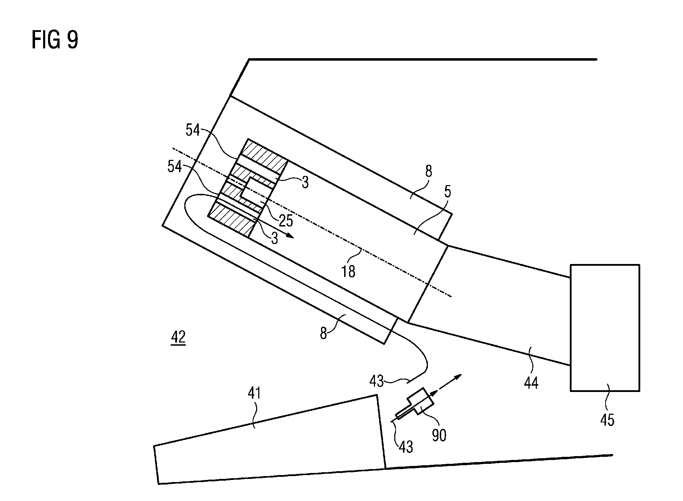

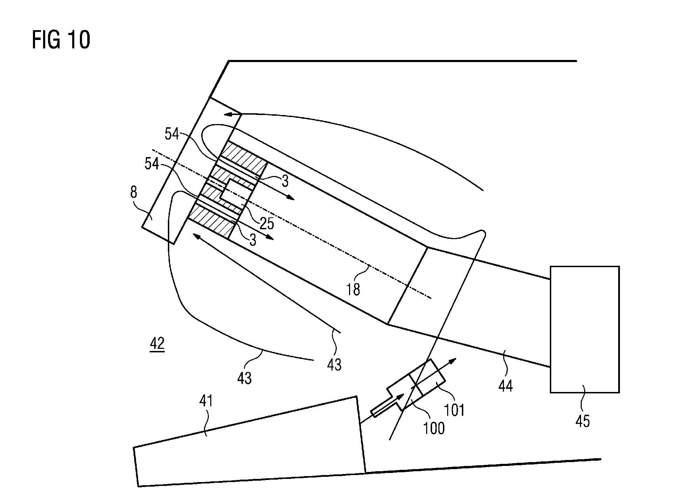

Fig. 8 zeigt ein viertes Beispiel eines erfindungsgemäßen Brenners mit Vorbrenner 80. Dieser ist im Plenum 42 angeordnet und umfasst eine Brennkammer 81. Verdichtete Luft 43 durchströmt den Vorbrenner 80 und wird dort verbrannt. Die dadurch entstehenden Heißgase werden noch ins Plenum 42 abgegeben oder direkt in den Ringspalt 8 (nicht gezeigt). In Fig. 9 wird ein Vorbrenner 90 ohne Brennkammer gezeigt, der ebenfalls im Plenum 42 angeordnet ist. Fig. 10 zeigt ebenfalls einen Vorbrenner 100 mit Brennkammer 101, der im Plenum 42 angeordnet ist. Dabei ist in Fig. 10 der Ringspalt 8 in seiner axialen Länge L stark verkürzt.

Die Vorbrenner (50,60,70,80,90,100) können als (mehrere) Einzel- oder Ringbrenner, als magerer Vormischbrenner, als Rich-Quench-Lean-Konzept oder an unterschiedlichen Positionen sowohl im Plenum 42 als auch auf die gesamte axiale Länge L bezogen auf die Brennkammerachse 18 am Ringspalt 8 angebracht werden.

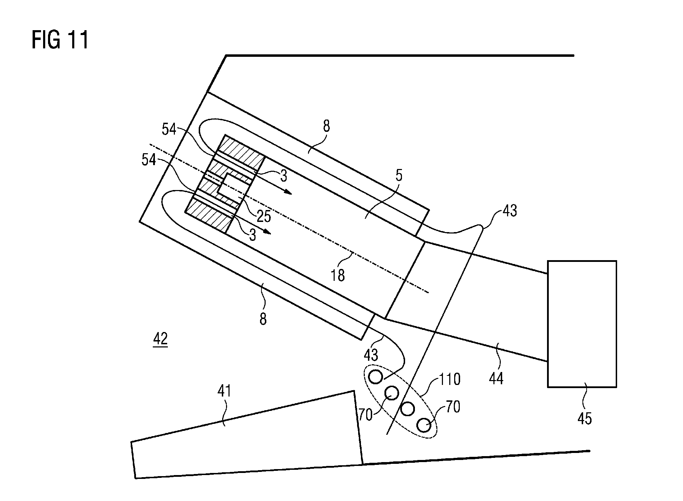

In Fig. 11 ist der Vorwärmer als Wärmetauscher 110 ausgestaltet. Der Wärmetauscher 110 wird dabei von dem Abgas der Gasturbine betrieben. Dabei kann der Wärmetauscher 110 aus mehreren Rohren 70 (Rohrwärmetauscher 110) bestehen. Diese können beispielsweise ringförmig oder als Gitter im Plenum 42 angebracht sein. Dabei werden die Rohre 70 von der aus einem Kompressor verdichteten Luft 43 mit hoher Geschwindigkeit angeströmt, wodurch sich ein effektiver Wärmeübergang ergibt. Wird bei Grundlast oder nahe Grundlast die Temperaturerhöhung nicht benötigt, kann durch ein angebrachtes äußeres Steuerorgan (nicht gezeigt) die Abgaszufuhr gestoppt werden und die Abgase z.B. komplett einem nachgeschalteten Dampferzeuger zugeführt werden (analog gilt das Prinzip auch für den Vorbrenner). So ist es auch möglich den Wärmetauscher 110 beweglich auszuführen, um die auftretenden Strömungsdruckverluste bei Grundlast oder nach der Grundlast zu vermeiden. Gerade bei Teillast ist ein effektiver Wärmeübergang zwischen Abgas und verdichteter Luft 43 möglich, da die Gasturbine bei nahezu konstanter Abgastemperatur gefahren wird, während sich die Endtemperatur der verdichteten Luft 43 mit steigender Last erst erhöht.

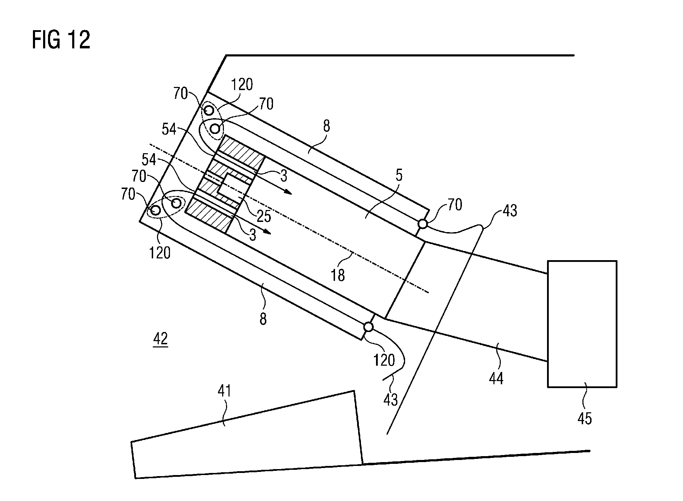

In Fig.12 ist der Wärmetauscher 120, hier ebenfalls als Rohrwärmetauscher 120 dargestellt, im Ringspalt 8 vorgesehen. Der Wärmetauscher 120 der Fig. 12 kann dabei aus mehreren Rohren bestehen, die zur gezielten Verteilung der Luft verwendet werden. Dabei kann abhängig von dem Rohrdurchmesser auch mehr als ein Rohrwärmetauscher 120 im Ringspalt 8 platziert werden. Es ist dabei möglich, den Wärmetauscher 120 Positionen, insbesondere axialen Positionen zwischen dem Eintritt in den Ringspalt 8 und dem Strahldüseneintritt 54, der zumeist als 180° Umlenkung ausgebildet ist. Dies ist besonders vorteilhaft, da der Wärmetauscher 120 zur Strömungsvergleichmäßigung verwendet werden kann. Dadurch wird der immanente Druckverlust positiv genutzt. Durch die Strömungsvergleichmäßigung wird ein verbessertes, stabileres Betriebsverhalten bewirkt, welches sich durch verbesserte CO- und NOx-Werte auszeichnet. Auch besteht, wie bei allen Vorwärmern, die Möglichkeit den als Wärmetauscher 120 ausgebildeten Vorwärmer abzuschalten oder aber die Vorwärmer bei geeignetem Design bzw. Aufbau der Brennerkammer 5 aus dem Strömungspfad hinaus zu bewegen. Durch die Wirkung des Wärmetauschers 120 als Strömungsvergleichmäßiger kann auf andere Maßnahmen zur Strömungsvergleichmäßigung weitestgehend verzichtet werden. Der Druckverlust dieser Maßnahmen würde dann einen eventuellen Druckverlust durch den Vorwärmer 120 kompensieren, so dass dieser keinen oder aber nur einen sehr geringen Druckverlust erzeugt.

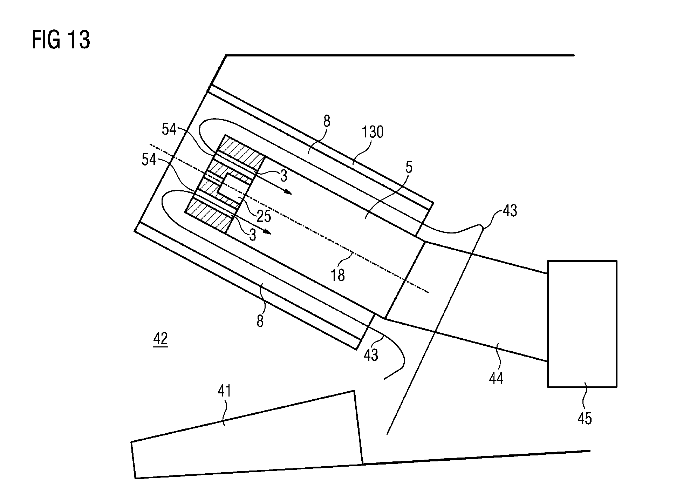

Fig. 13 zeigt einen als Wärmetauscher 130 ausgebildeten Vorwärmer, welcher als Wärmetauscher -Ringspalt 130 ausgestaltet ist. Dieser Wärmetauscher -Ringspalt 130 kann beispielsweise außen um den Ringspalt 8 herum angeordnet sein. Der Wärmetauscher -Ringspalt 130 kann dabei beispielsweise spiralförmig mit Kanälen durchzogen sein, welche einen Gegenstromwärmetauscher bilden (nicht gezeigt).Dabei können auch mehrere unabhängige Kanäle vorhanden sein, die beispielsweise außen an den Wärmetauscher -Ringspalt 130 wieder zurückgeführt werden (nicht gezeigt). Der so ausgestaltete Wärmetauscher - Ringspalt 130 hat den Vorteil, dass sich kein zusätzlicher Strömungswiderstand bildet.

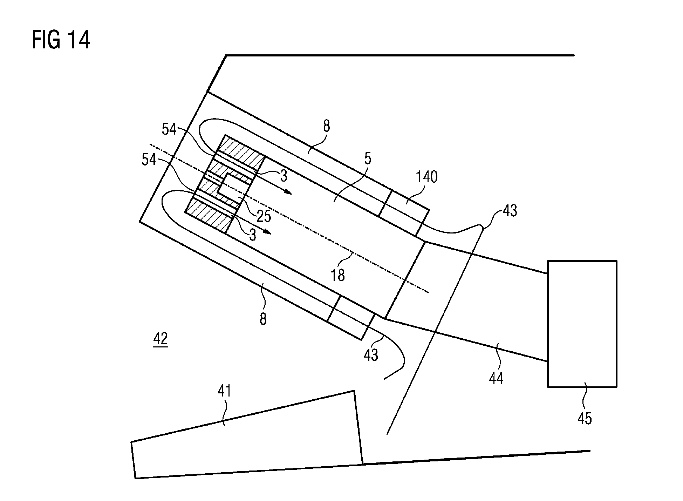

Fig. 14 zeigt einen als Vorwärmer ausgebildeten elektrischen Heizer 140. Der Heizer 140 kann als ein Heizgitter ausgestaltet sein. Zudem kann der Heizer 140 dem Ringspalteintritt vorgeschaltet sein. Vorteilhafterweise kann der Heizer 140 auch zur Strömungsvergleichmäßigung (Strömungsgleichrichtung, z.B. durch Drallreduzierung) und/oder zur Bereitstellung einer definierten Turbulenzstruktur verwendet werden. Durch die Strömungsvergleichmäßigung wird vorteilhafterweise ein verbessertes, stabileres Betriebsverhalten bewirkt, welches sich durch verbesserte CO- und NOx-Werte auszeichnet. Die hier beschriebenen Vorteile lassen sich durch eine definierte Turbulenzstruktur zudem noch verbessern. Durch die Wirkung des Heizers 140 als Strömungsvergleichmäßiger kann auf andere Maßnahmen zur Strömungsvergleichmäßigung weitestgehend verzichtet werden. Der Druckverlust dieser Maßnahmen würde dann einen eventuellen Druckverlust durch den Heizer 140 kompensieren, so dass dieser keinen oder aber nur einen sehr geringen Druckverlust erzeugt. Bei geeigneter Ausgestaltung des Heizers 140 kann dieser in den Ringspalt 8 hineingeschoben und im Ringspalt 8 anschließend weiter verschoben werden. Der Heizer 140 ist dabei so ausgeführt, dass er bedarfsweise ein- und ausgeschaltet werden kann. Vorteilhafterweise kann der elektrische Heizer 140 gekoppelt mit einer entsprechenden Regelung, als aktive Maßnahme gegen Brennkammerschwingungen eingesetzt werden, indem er auf Druckpulsationen durch eine höhere Lufttemperatur reagiert.

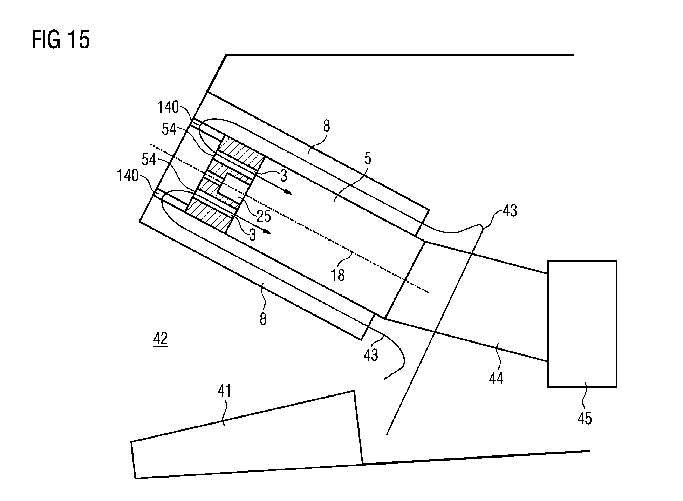

Fig. 15 zeigt eine weitere mögliche Position eines solchen elektrischen Heizers 140 am Strahldüseneintritt 54 an. An dieser Position kann der Heizer 140 die Aufgabe zur Strömungsvergleichmäßigung übernehmen. Somit entsteht auch hier kein zusätzlicher Druckverlust.

Die Kapazität aller dargestellten Vorwärmer wird abhängig von der angestrebten Temperaturerhöhung und der Betriebsweise (fett/magere Verbrennung) ausgeführt.

Alle Vorwärmer werden dabei dergestalt ausgeführt, dass die erzeugten Abgase nicht gegen eine Wand des bisherigen Brennersystems prallen und dort thermische Schädigungen hervorrufen.

Zur gleichmäßigen Mischung wird ein möglichst langer Mischungsweg zwischen den durch den Vorwärmern entstanden Heißgases und der Luft 43 (bzw. des Luft/Brennstoffgemisches angestrebt.

Zusätzlich können wirbel- oder turbulenzerzeugende Elemente für eine Verbesserung der Mischung eingesetzt werden.

Zusätzlich ist es möglich im Plenum 42 oder im Ringspalt 8 um die Brennkammer 5 Abgase aus der Gasturbine zuzumischen, um die Temperatur des Frischgases zu erhöhen. Hierzu ist ein externer Kompressor notwendig, um das Abgas auf den entsprechenden Druck zu bringen (nicht gezeigt). Diese Zugabe kann z.B. auch bei Grundlast oder nahe der Grundlast bedarfsweise abgeschaltet werden.

Zudem ist es auch möglich Abgase aus dem Dampferzeuger vor einer ersten Kompressorreihe oder in einer ersten Kompressorreihen zuzugeben. Auch dies erhöht die Lufttemperatur am Kompressoraustrittsdiffusor 41. Auch hier wird ein externer Kompressor benötigt.

Die Abreichung des Sauerstoffes in der Luft bietet aufgrund von kinetischen Effekten Vorteile bei der NOx Entstehung.

Gegebenenfalls entstehender negativer Effekt des Vorwärmers auf NOx kann durch eine Reduzierung des Pilotgases zumindest teilweise ausgeglichen werden.

## Patentansprüche

1. Brenner zur Stabilisierung der Verbrennung einer Gasturbine, welcher eine Brennkammer (5) und mehrere in die Brennkammer (5) mündende Düsen umfasst, wobei mit den Düsen durch einen Fluidstrahl Fluid in die Brennkammer (5) eingebracht wird, wobei das Fluid in der Brennkammer (5) zu Heißgas (4) verbrannt wird, wobei bei mindestens einer Düse ein Ringspalt (8) vorgesehen ist, über welchen der Düse das Fluid an einem Düseneintritt zugeführt wird,
**dadurch gekennzeichnet, dass** ein Vorwärmer vorgesehen ist, welcher das Fluid vor Eintritt in die Düse erwärmt.

2. Brenner nach Anspruch 1,
**dadurch gekennzeichnet, dass** als Düse eine Strahldüse (3) und als Düseneintritt ein Strahldüseneintritt (54) vorgesehen ist.

3. Brenner nach einem der vorhergehenden Ansprüche 1-2,
**dadurch gekennzeichnet, dass** als Fluid ein Brennstoff oder Brennstoff/Luft-Gemisch oder Luft vorgesehen ist.

4. Brenner nach einem der vorhergehenden Ansprüche 1-3,
**dadurch gekennzeichnet, dass** der Ringspalt (8) zumindest über die gesamte axiale Länge der Düse und zumindest teilweise der Brennkammer (5) vorgesehen ist.

5. Brenner nach einem der vorhergehenden Ansprüche 1-3,
**dadurch gekennzeichnet, dass** der Ringspalt (8) zumindest am Düseneintritt vorgesehen ist.

6. Brenner nach einem der vorhergehenden Ansprüche,
**dadurch gekennzeichnet, dass** der Vorwärmer als Vorbrenner (50, 60,70,80,90,100) ausgestaltet ist.

7. Brenner nach Anspruch 6,
**dadurch gekennzeichnet, dass** der Vorbrenner (50, 60,70,80,90,100) als Ringbrenner ausgeführt ist.

8. Brenner nach einem der Ansprüche 6-7,
**dadurch gekennzeichnet, dass** der Vorbrenner (50,60,70,80,90,100) als Ringsegmentbrenner mit oder ohne Unterbrechung ausgeführt ist.

9. Brenner nach Anspruch 6,
**dadurch gekennzeichnet, dass** der Vorbrenner (50,60,70,80,90,100) als Einzelbrenner ausgebildet ist.

10. Brenner nach einem der vorhergehenden Ansprüche 6-9,
**dadurch gekennzeichnet, dass** der Vorbrenner (50) als Trapped Vortex Vorbrenner ausgestaltet ist.

11. Brenner nach einem der vorhergehenden Ansprüche 6-10,
**dadurch gekennzeichnet, dass** der Vorbrenner (60,80,90,100) mit eigener Brennkammer (61,81,91,101) ausgestaltet ist.

12. Brenner nach einem der vorhergehenden Ansprüche 6-11,
**dadurch gekennzeichnet, dass** der Vorbrenner (70) im Ringspalt (8) mit oder ohne Brennkammer selber angeordnet ist.

13. Brenner nach einem der vorhergehenden Anspruch 6-12,
**dadurch gekennzeichnet, dass** der Ringspalt (8) selber als Brennkammer ausgebildet ist.

14. Brenner nach einem der vorhergehenden Ansprüche 6-11,
**dadurch gekennzeichnet, dass** der Vorbrenner (50,60) am Ringspalt (8) brennkammerabseitig mit oder ohne Brennkammer (61,81,91,101) angeordnet ist.

15. Brenner nach Anspruch 6-12,
**dadurch gekennzeichnet, dass** der Ringspalt (8) einen Umlenkbereich (73) umfasst, welches das Fluid in den Düseneintritt umlenkt, und der Vorbrenner (70) mit oder ohne Brennkammer im Umlenkbereich (73) angeordnet ist.

16. Brenner nach einem der vorhergehenden Ansprüche 6-15,
**dadurch gekennzeichnet, dass** eine Hauptstufe vorgesehen ist, welche die mindestens eine Düse sowie optional einen Pilotbrenner (25) umfasst.

17. Brenner nach Anspruch 16,
**dadurch gekennzeichnet, dass** der Vorbrenner (50, 60,70,80,90,100) mit einem fetten Gemisch und der Hauptstufe mit einem magereren Gemisch als RQL-Verbrennungskonzept ausgebildet sind.

18. Brenner nach einem der Ansprüche 1-5
**dadurch gekennzeichnet, dass** der Vorwärmer als Wärmetauscher (110,120,130) ausgebildet ist.

19. Brenner nach Anspruch 18,
**dadurch gekennzeichnet, dass** der Wärmetauscher (120) im Ringspalt (8) angeordnet ist.

20. Brenner nach Anspruch 19, **dadurch gekennze ichnet**, **dass** der Wärmetauscher (110,120,130) aus zumindest einem Rohr (70) (Rohrwärmetauscher) besteht.

21. Brenner nach Anspruch 18
**dadurch gekennzeichnet, dass** Ringspalt (8) als der Wärmetauscher (130) ausgeführt ist.

22. Brenner nach Anspruch 21
**dadurch gekennzeichnet, dass** der Ringspalt (8) spiralenförmig mit Kanälen durchzogen ist, welche einen Gegenstromwärmetauscher bilden.

23. Brenner nach Anspruch 18-19
**dadurch gekennzeichnet, dass** der Wärmetauscher als elektrischer Heizer (140) ausgebildet ist.

24. Brenner nach Anspruch 23
**dadurch gekennzeichnet, dass** der als elektrischer Heizer (140) bedarfsweise ausschaltbar ist.

25. Brenner nach einem der vorhergehenden Ansprüche 1-24,
**dadurch gekennzeichnet, dass** ein Kompressor mit Kompressoraustrittsdiffusor (42) vorhanden ist und zwischen Kompressoraustrittsdiffusor (41) und Ringspalt (8) ein Plenum (42) vorgesehen ist.

26. Brenner nach Anspruch 25,
**dadurch gekennzeichnet, dass** der Vorwärmer (50,60,80,90,100,110,120,130,140) im Plenum (42) angeordnet ist.

27. Brenner nach einem der vorhergehenden Ansprüche 1-26,
**dadurch gekennzeichnet, dass** der Vorwärmer (50,60,80,90,100,110,120,130,140) bedarfsweise an- bzw. abschaltbar ist.

28. Brenner nach einem der vorhergehenden Ansprüche 1-26,
**dadurch gekennzeichnet, dass** das Fluid einen Strömungspfad ausbildet und der Vorwärmer (50,60,80,90,100,110,120,130,140) bedarfsweise aus diesem Strömungspfad herausbewegbar ist.

29. Verfahren zur Stabilisierung der Verbrennung eines Brenners einer Gasturbine, welcher eine Brennkammer (5) und mehrere in die Brennkammer (5) mündende Düsen umfasst, wobei mit den Düsen mittels einem Fluidstrahl Fluid in die Brennkammer (5) eingebracht wird, wobei in der Brennkammer (5) das Fluid verbrannt wird, wodurch ein Heißgas (4) entsteht, wobei bei mindestens einer Düse ein Ringspalt (8) vorgesehen ist, über welchen der Düse das Fluid zugeführt wird,
**dadurch gekennzeichnet, dass**
das Fluid mittels eines Vorwärmers (50,60,70,80,90,100) vor Eintritt in die Düse erwärmt wird.
